# EUROPEAN PATENT APPLICATION

(11) **EP 1 206 099 A2**
(43) Date of publication of application: **15.05.2002**
(21) Application number: 01201383.5
(22) Date of filing: 17.04.2001
(51) Int. Cl.: H04L 29/06, H04L 12/66

(54) **Network interface**

(30) Priority: 14.11.2000 US 712616
(71) Applicant: Sancastle Technologies Ltd., Yokne'am 20692 (IL)
(72) Inventor: Czeiger, Moshe, Kiryat Shmuel,Haifa 26341 (IL); Bruchian,Goel, Kiryat Ata 28000 (IS)
(74) Representative: Urizar Anasagasti, José Antonio

(57) **Abstract**

A method for transferring data, including receiving a source data-frame from a source client (34) in a first network (12) operating under a first industry-standard protocol, the data-frame including a first-network-destination-address compatible with the first protocol. The method includes reading from a content addressable memory (CAM) (26) a second-network-destination-address of a destination client (36) in a second network (15) operating under a second industry-standard protocol, different from the first protocol, using the first-network-destination-address as an index. The method further includes concatenating content data comprised in the source data-frame with a second-network header including the second-network-destination-address so as to generate a second-network data-frame compatible with the second protocol for transmission over the second network.

## Description

### FIELD OF THE INVENTION

The present invention relates generally to data transfer, and specifically to data transfer between networks operating under differing protocols.

### BACKGROUND OF THE INVENTION

Methods for transferring data within networks, such as local area networks (LANS) and storage area networks (SANs), rely on standard protocols describing how the data are transferred. Typically the data for a specific network are transferred as data-frames having a format defined by the protocol governing the functioning of the network. Two protocols which are used for transferring data at gigabit/s (Gbps) rates are an IEEE 802.3(Z) Ethernet protocol, issued by the Institute of Electrical and Electronics Engineers, Inc., New Jersey, and an FC-PH Fibre Channel protocol, issued by the American National Standards Institute, Washington, D. C.

Methods for transferring data between networks operating under different protocols operating at Gbps rates are known in the art. Dell Computer Corporation of Round Rock, Texas, provides a PowerVault Fibre Channel family of products which may be configured to transfer data between a Fibre Channel network and a gigabit Ethernet (GBE) network. Data transfer between the networks requires a suitably-adapted server.
In an article by Sherri Azgomi, which can be found at http://www.csdmag.com/main/1999/11/9911feat3.htm, and which is incorporated herein by reference, the author describes content addressable memories (CAMs) and gives a number of uses of CAMs. In contrast to a random access memory (RAM), wherein an address is supplied and data at that address are read, data are supplied to a CAM and the address where those data reside is read. An illustration of the use of a CAM in a network switch is given, wherein the CAM extracts and processes address information in incoming data packets. In order to switch the packet to a correct outgoing port, the CAM compares the destination address with a table of addresses stored within the CAM. On-chip implementations of CAM in the form of embedded functions are available as high-density programmable logic devices (PLDs), for example, as an Altera 10K100E device, produced by Altera Corporation of San Jose, California.

U. S. patent 6, 032, 209 to Mros et al., whose disclosure is incorporated herein by reference, describes a hot-swappable high speed point-to-point interface. The interface incorporates circuitry to eliminate electromagnetic interference when the interface is hot-swapped. The interface provides a connection between a high speed transmitter on a transmitter card, and a high speed receiver on another card. Both transmitter and receiver are able to operate at rates of the order of Gbps, and under GBE or Fibre Channel protocols.

### SUMMARY OF THE INVENTION

It is an object of some aspects of the present invention to provide an improved method and apparatus for transferring data between networks operating under different protocols.

In preferred embodiments of the present invention, an interface couples two network communication systems operating under different protocols. Most preferably, both systems comprise networks operating at a rate of at least 1 gigabit/s (Gbps), the first of the systems supporting an Ethernet protocol, and the second system supporting a Fibre Channel protocol. The interface is implemented so that it is transparent to clients using both systems. Thus, from the point of view of a client in the first system, all clients in the second system are set to be "visible," and data may be transferred via the interface from the client in the first system to any of the clients in the second system. Similarly, from the point of view of a client in the second system, all clients in the first system are set to be visible, and data may likewise be transferred in the opposite direction via the interface.

The interface is implemented using industry-standard devices and/or one or more custom or semi-custom devices such as application specific integrated circuits (ASICs), most preferably as a component which couples to an industry-standard hub operative in one of the systems. Thus the need for a dedicated server, as used in methods known in the art for data transfer between systems operating on different Gbps protocols, is obviated. Furthermore, when the interface is implemented using dedicated components and/or ASICs, data transfer between the two systems is significantly faster than data transfer using a server.

In preferred embodiments of the present invention, a content addressable memory (CAM) comprised in the interface is used in order to quickly translate addresses in the first system to addresses in the second system. Most preferably, the CAM "learns" the addresses of clients after installation of the interface, by analyzing data transferred in the systems in "background." The CAM uses the learned addresses to build a look-up table for converting addresses between the two systems.

There is therefore provided, according to a preferred embodiment of the present invention, a method for transferring data, including:
receiving a source data-frame from a source client in a first network operating under a first industry-standard protocol, the data-frame comprising a first-network-destination-address compatible with the first protocol;
reading from a content addressable memory (CAM) a second-network-destination-address of a destination client in a second network operating under a second industry-standard protocol, different from the first protocol, using the first-network-destination-address as an index; and
concatenating content data comprised in the source data-frame with a second-network header comprising the second-network-destination-address so as to generate a second-network data-frame compatible with the second protocol for transmission over the second network.

Preferably, receiving the source data-frame includes separating the source data-frame into the content data and a source header including the first-network-destination-address.

Preferably, concatenating the content data includes temporarily storing the content data in one or more memory devices and reading the content data from the one or more memory devices.

Further preferably, the method includes:
incorporating the first-network-destination-address compatible with the first protocol in the second-network data-frame;
receiving the second-network data-frame at the destination client; and
concatenating further content data with the first-network-destination-address so as to generate a first-network data-frame compatible with the first protocol for transmission over the first network to the source client.

Preferably, receiving the second-network data-frame includes separating the second-network data-frame into the content data and a first-network header including the first-network-destination-address.

Further preferably, receiving the second-network data-frame includes temporarily storing the content data in one or more memory devices, and concatenating the content data includes reading the content data from the one or more memory devices.

Preferably, the method includes receiving a broadcast data-frame including a second-network-source-address from the destination client indicative of an identity of the destination client and storing the second-network-source-address in the CAM.

Preferably, receiving the broadcast data-frame includes:
reading the second-network-source-address in a central processing unit (CPU);
generating in the CPU a first-network-source-address responsive to the second-network-source-address and compatible with the first network; and
storing in the CAM the first-network-source-address and the second-network-source-address as corresponding addresses.

Preferably, the first protocol includes an Ethernet protocol, and the second protocol includes a Fibre Channel protocol.

There is further provided, according to a preferred embodiment of the present invention, apparatus for transferring data, including:
receive-circuitry, adapted to receive a source data-frame from a source client in a first network operating under a first industry-standard protocol, the source data-frame including a first-network-destination-address compatible with the first protocol;
a content addressable memory (CAM) in which a second-network-destination-address of a second network client in a second network is stored, the second network operating under a second industry-standard protocol, different from the first protocol; and
transmit-circuitry adapted to read the second-network-destination-address from the CAM, using the first-network-destination-address as an index, and to concatenate content data included in the source data-frame with a second network header including the second-network-destination-address so as to generate a second network data-frame compatible with the second protocol for transmission over the second network.

Preferably, the apparatus includes a central processing unit (CPU) which is adapted to receive a broadcast data-frame including a second-network-source-address indicative of an identity of the second network client, to generate a first-network-source-address responsive to the second-network-source-address and compatible with the first network, and to store in the CAM the first-network-source-address and the second-network-source-address as corresponding addresses.

Preferably, the receive-circuitry includes one or more memory devices which are adapted to temporarily store the content data and provide the content data to the transmit-circuitry.

Further preferably, the apparatus includes a hub wherein the receive-circuitry, the CAM, and the transmit-circuitry are installed and which couples clients within the second network.

Preferably, the first protocol includes an Ethernet protocol, and the second protocol inlcudes a Fibre Channel protocol.

Preferably, the receive-circuitry is adapted to separate the source data-frame into the content data and a source header including the first-network-destination-address.

Preferably, the transmit-circuitry is adapted to incorporate the first-network-destination-address compatible with the first protocol in the second-network data-frame, and the receive-circuitry is adapted to concatenate further content data received from the second network client with the first-network-destination-address so as to generate a first-network data-frame compatible with the first protocol for transmission over the first network to the source client.

Further preferably, the transmit-circuitry is adapted to receive the second-network data-frame and to separate the second-network data-frame into the further content data and a first-network header including the first-network-destination-address.

Preferably, the transmit-circuitry includes one or more memory devices which are adapted to temporarily store the further content data and provide the further content data to the receive-circuitry.

The present invention will be more fully understood from the following detailed description of the preferred embodiments thereof, taken together with the drawings, in which:

### BRIEF DESCRIPTION OF THE DRAWINGS

Fig. 1 is a schematic block diagram of an interface transferring data between two communication networks, according to a preferred embodiment of the present invention;
Fig. 2 shows structures of Internet protocol (IP) data-frames transmitted via an Ethernet protocol, and IP data-frames transmitted via a Fibre Channel protocol, as are known in the art;
Fig. 3 is a schematic flow chart showing a method for generating an address translation look-up table comprised in a content-addressable-memory (CAM), according to a preferred embodiment of the present invention;
Fig. 4 is a schematic flow chart showing a method for transferring data from a first network to a second network, according to a preferred embodiment of the present invention; and
Fig. 5 is a schematic flow chart showing a method for transferring data from the second network to the first network, according to a preferred embodiment of the present invention.

### DETAILED DESCRIPTION OF PREFERRED EMBODIMENTS

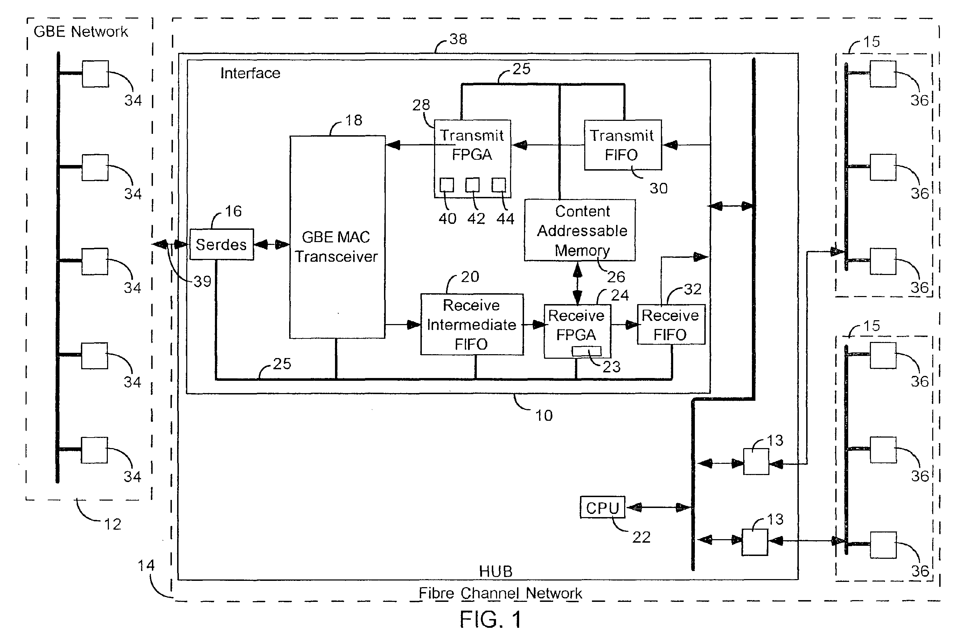

Reference is now made to Fig. 1, which is a schematic block diagram of an interface 10 for transferring data between two communication networks, according to a preferred embodiment of the present invention. Interface 10 is most preferably implemented using one or more industrial-standard discrete devices and/or one or more custom or semi-custom devices such as application specific integrated circuits (ASICs). Interface 10 acts as an interface between one or more clients 36 operating in a Fibre Channel network 14 and one or more clients 34 operating in a gigabit Ethernet network 12.

Interface 10 is most preferably installed in a hub 38 of network 14, in which case interface 10 most preferably receives its power from a power supply comprised in the hub. A suitable hub comprises any industry-standard or custom-built hub which is operative in Fibre Channel network 14 or Ethernet network 12. Interface 10 couples via the hub to the network in which the hub is operative, and couples to the other network by industry-standard network connections 39 such as cables or wireless communication.. Hub 38 typically comprises one or more other interfaces 13, which each couple to clients 36 in respective sections 15 of the network within which the hub is operative. Hub 38 further comprises a central processing unit (CPU) 22, preferably an Intel 960 produced by Intel Corporation, of Santa Clara, California, which controls the operation of the hub. As described in more detail hereinbelow, CPU 22 is also utilized by interface 10 when interacting with devices comprised in the interface.

Devices in interface 10 are coupled by a local bus 25. Interface 10 comprises a serializer-deserializer (SERDES) transceiver 16, which receives data frames in a serial format from network 12 and converts the frames to an industry-standard parallel format, preferably based on a standard 10-bit interface bus. Alternatively, another industry-standard interface bus, such as an 8-bit interface bus, is used. The converted frames are transferred to an industry-standard gigabit Ethernet controller 18 compatible with transceiver 16, most preferably a 8101 PCI Gigabit MAC device produced by SEEQ Technology Inc. of San Jose, CA. Controller 18 operates as receive and transmit circuitry and, *inter alia*, controls network 12.

In network 12, frames having destination addresses for a specific client 36 in network 14, as determined by a network 12 frame header described in more detail below, are forwarded from controller 18 to a receive frame intermediate memory 20, wherein the frame is temporarily stored. Most preferably memory 20 is a first-in first-out (FIFO) memory device. The frame is transferred to a receive-frame field programmable gate array (FPGA) 24. In FPGA 24 the frame header is replaced by a network 14 frame header described below, using a network address for network 14 read from an address translation look-up table comprised in a content addressable memory (CAM) 26. Preferably, CAM 26 comprises a MUAA co-processor produced by Music Semiconductors of Eygelshoven, The Netherlands. A process by which CAM 26 most preferably generates its address translation look-up table is described hereinbelow. The new frame is forwarded to a receive frame memory 32, most preferably a FIFO, wherein the frame is temporarily stored before being transferred to network 14, so that memory 32 acts as transmit-circuitry for the frame.

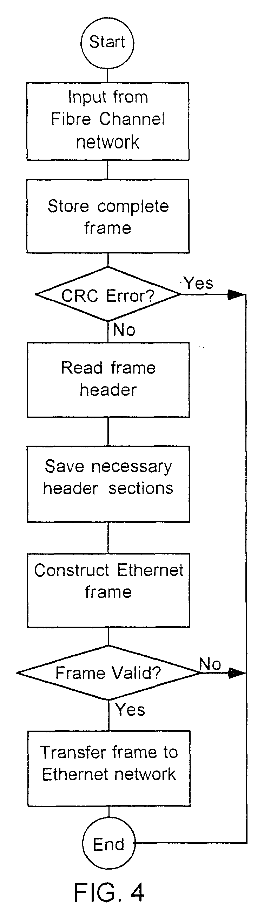

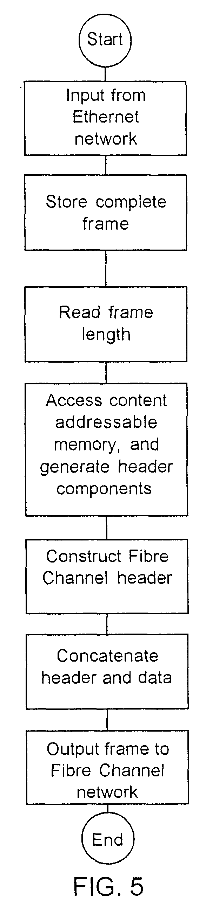

In network 14, frames from the network are temporarily stored in a transmit FIFO 30 before being transmitted to a transmit FPGA 28. In FPGA 28, frames having destination addresses in network 12 have their frame header reconfigured to be compatible with network 12, and the reconfigured frame is transferred to network 12 via controller 18 and transceiver 16. Frames which do not have destination addresses in network 12 are discarded. The transfer of frames between network 12 and network 14, and the functions of devices comprised in interface 10, are described in more detail below with reference to Figs. 4 and 5.

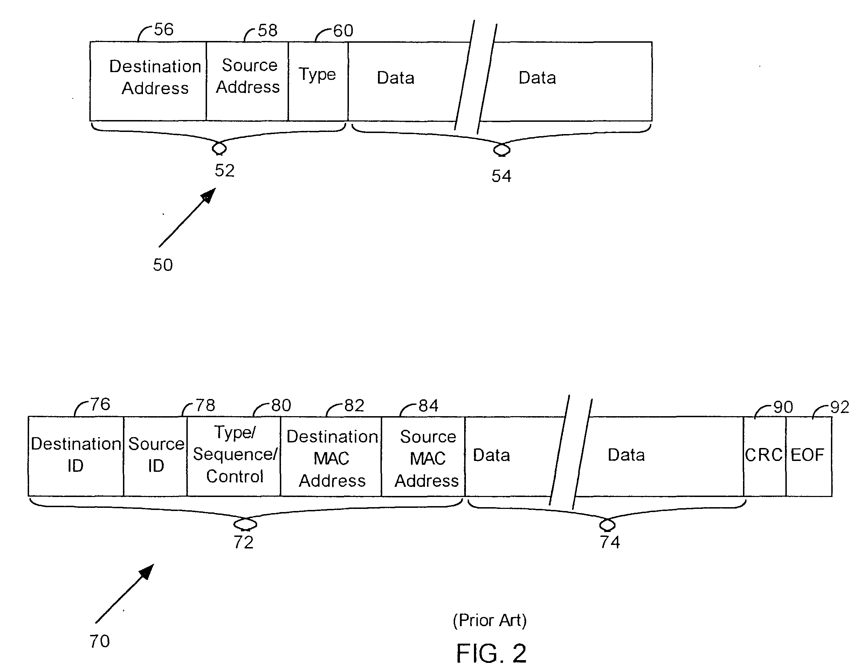

Fig. 2 shows structures of internet protocol (IP) data-frames transmitted via an Ethernet protocol, and IP data-frames transmitted via a Fibre Channel protocol, as are known in the art. An Ethernet data-frame 50 operating under IP comprises a header section 52 and a data section 54. Header section 52 corresponds to the network 12 frame header referred to above, and has a length equivalent to 7 data-words, wherein each dataword is 16 bits long. Header section 52 comprises a frame destination address 56, a frame source address 58, and a frame type designation 60.

A Fibre Channel data-frame 70 operating under IP comprises a header section 72 and a data section 74. Header section 72 corresponds to the network 14 frame header referred to above, and has a length equivalent to 24 data-words. Header section 72 comprises a local destination identification 76, a local source identification 78, frame type/sequencing/control data 80, a Media Access Control (MAC) destination address 82, and a MAC source address 84. Data-frame 70 also comprises a cyclic redundancy code (CRC) error-checking section 90 and an end-of-frame (EOF) section 92. When a data-frame is converted by interface 10 from an Ethernet data-frame to a Fibre Channel data-frame, or vice versa, data sections 54 and 74 are substantially identical. For conversion from an Ethernet data-frame to a Fibre Channel data-frame header, section 52 is converted to header section 72. For conversion from a Fibre Channel data-frame to an Ethernet data-frame, header section 72 is converted to header section 52.

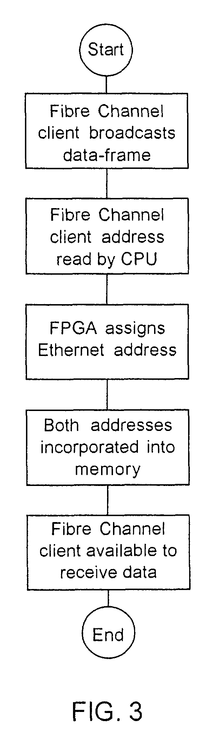

Fig. 3 is a schematic flowchart showing a method for generating the address translation look-up table comprised in CAM 26, according to a preferred embodiment of the present invention. Fig. 3 applies for data-frames received by interface 10 from network 14. In an initial step, as each client 36 in network 14 initiates operations, the client broadcasts a data-frame comprising its specific source address. The broadcast frame is received by CPU 22 in hub 38 and by FIFO 30 in interface 10, and the source address is read by CPU 22 from header 72 of the broadcast frame. FPGA 28 generates an address compatible with network 12 for the specific client 36, and both addresses, i.e., the source address and the generated address, are incorporated as corresponding addresses into the address translation look-up table. Once the corresponding addresses have been incorporated into the table, the specific client 36 is able to receive data from network 12 via interface 10, and is made "visible" to clients in network 12 by controller 18 by a data-frame being broadcast in network 12.

A generally similar process to that described above with reference to Fig. 3 applies as each client 34 in network 12 initiates operations. Each specific client 34 broadcasts a data-frame comprising its specific source address. The broadcast frame is received by transceiver 16 and controller 18, and the source address is read by CPU 22 from header 52 of the broadcast frame. The CPU generates an address compatible with network 14 for the specific client 34, and both addresses are incorporated as corresponding addresses into the address translation look-up table of CAM 26, so that the CAM "learns" from CPU 22. The specific client 34 is then able to receive data from network 14 via interface 10, and is made visible to clients in network 14.

It will be appreciated that the steps described above for the generation of the address look-up table in CAM 26 are able to occur substantially independently of other data-transfer processes occurring in networks 12 and 14. The steps are most preferably performed as a continuing background operation controlled by software components instantiated by CPU 22, so that clients operating in both networks are substantially unaware of the steps being performed.

Fig. 4 is a schematic flow chart showing a method for transferring data from network 14 to network 12, according to a preferred embodiment of the present invention. In an initial step, a complete Fibre Channel data-frame is stored in FIFO 30. Once the data-frame has been stored, as determined by EOF section 92 of the data-frame, an error-check of the frame is performed. Most preferably, the error check is performed using CRC section 90. If an error is detected, then the contents of FIFO 30 up to the EOF of the data-frame are flushed from the FIFO. If no error is detected in the error-check step, then header section 72 is read from the data-frame. Destination address 82, source address 84, and frame type/sequencing /control data 80 are saved in respective registers 40, 42, and 44 comprised in FPGA 28. A data-frame compatible with network 12 is constructed using the data saved in registers 40, 42, and 44, and the data from data section 74. The constructed network-12-compatible data-frame header comprises destination address 56 corresponding to destination address 82, source address 58 corresponding to source address 84, and type section 60 derived from data 80. Data section 54 corresponds to data section 74. The network-12-compatible data-frame, formed by concatenating the network-12-compatible data-frame header and data section 54, is checked for validity by methods known in the art. If the data-frame is valid it is forwarded to controller 18, from where the data-frame is transferred to network 12. If the constructed data-frame is not valid, the data-frame is not forwarded.

Fig. 5 is a schematic flowchart showing a method for transferring data from network 12 to network 14, according to a preferred embodiment of the present invention. In an initial step, a complete frame is input from network 12, via transceiver 16 and controller 18, to intermediate FIFO 20. Once FIFO 20 has received the frame, a length of the frame is measured and a value corresponding to the measured length is stored in a memory 23 comprised in FPGA 24. Also in FPGA 24, components of header 72 are generated as follows.

Destination identification 76 is generated by accessing CAM 26 and reading the address corresponding to the destination address of the data-frame. Source identification 78 is generated by CPU 22 as substantially the same identification as a source identification of the corresponding MAC. Type/sequence/control data 80 are generated from the measured data length stored in memory 23, and from data generated by CPU 22. Destination address 82 is assigned to be the value corresponding to destination address 56, and source address 84 is assigned to be the value corresponding to source address 58, wherein destination address 56 and source address 58 are the values comprised in the complete frame input from network 12.

Frame-header 72 is generated from its components, and the frame-header is then concatenated with data derived from data section 74, corresponding to data section 54, to form complete data-frame 70. CRC and EOF (end of frame) sections are added to the frame. The complete data frame is then transferred for temporary storage to FIFO 32, from where it is output to network 14.

It will be appreciated that the preferred embodiments described above are cited by way of example, and that the present invention is not limited to what has been particularly shown and described hereinabove. Rather, the scope of the present invention includes both combinations and subcombinations of the various features described hereinabove, as well as variations and modifications thereof which would occur to persons skilled in the art upon reading the foregoing description and which are not disclosed in the prior art.

## Claims

1. A method for transferring data, comprising:
receiving a source data-frame from a source client (34) in a first network (12) operating under a first industry-standard protocol, the data-frame comprising a first-network-destination-address compatible with the first protocol;
reading from a content addressable memory (CAM) (26) a second-network-destination-address of a destination client (36) in a second network (15) operating under a second industry-standard protocol, different from the first protocol, using the first-network-destination-address as an index; and
concatenating content data comprised in the source data-frame with a second-network header comprising the second-network-destination-address so as to generate a second-network data-frame compatible with the second protocol for transmission over the second network.

2. A method according to claim 1, wherein receiving the source data-frame comprises separating the source data-frame into the content data and a source header comprising the first-network-destination-address.

3. A method according to claim 1 or claim 2, wherein concatenating the content data comprises temporarily storing the content data in one or more memory devices (20, 30, 32) and reading the content data from the one or more memory devices.

4. A method according to any of the above claims, and comprising:
incorporating the first-network-destination-address compatible with the first protocol in the second-network data-frame;
receiving the second-network data-frame at the destination client; and
concatenating further content data with the first-network-destination-address so as to generate a first-network data-frame compatible with the first protocol for transmission over the first network to the source client.

5. A method according to claim 4, wherein receiving the second-network data-frame comprises separating the second-network data-frame into the content data and a first-network header comprising the first-network-destination-address.

6. A method according to claim 4 or claim 5, wherein receiving the second-network data-frame comprises temporarily storing the content data in one or more memory devices, and wherein concatenating the content data comprises reading the content data from the one or more memory devices.

7. A method according to claim 1, and comprising receiving a broadcast data-frame comprising a second-network-source-address from the destination client indicative of an identity of the destination client and storing the second-network-source-address in the CAM.

8. A method according to claim 7, wherein receiving the broadcast data-frame comprises:
reading the second-network-source-address in a central processing unit (CPU) (22);
generating in the CPU a first-network-source-address responsive to the second-network-source-address and compatible with the first network; and
storing in the CAM the first-network-source-address and the second-network-source-address as corresponding addresses.

9. A method according to claim 1, wherein the first protocol comprises an Ethernet protocol, and wherein the second protocol comprises a Fibre Channel protocol.

10. Apparatus for transferring data, comprising:
receive-circuitry (16, 18, 24), adapted to receive a source data-frame from a source client (34) in a first network (12) operating under a first industry-standard protocol, the source data-frame comprising a first-network-destination-address compatible with the first protocol;
a content addressable memory (CAM) (26) in which a second-network-destination-address of a second network client (36) in a second network (15) is stored, the second network operating under a second industry-standard protocol, different from the first protocol; and
transmit-circuitry (28) adapted to read the second-network-destination-address from the CAM, using the first-network-destination-address as an index, and to concatenate content data comprised in the source data-frame with a second network header comprising the second-network-destination-address so as to generate a second network data-frame compatible with the second protocol for transmission over the second network.

11. Apparatus according to claim 10, and comprising a central processing unit (CPU) (22) which is adapted to receive a broadcast data-frame comprising a second-network-source-address indicative of an identity of the second network client, to generate a first-network-source-address responsive to the second-network-source-address and compatible with the first network, and to store in the CAM the first-network-source-address and the second-network-source-address as corresponding addresses.

12. Apparatus according to claim 10 or claim 11, wherein the receive-circuitry comprises one or more memory devices (20, 32) which are adapted to temporarily store the content data and provide the content data to the transmit-circuitry.

13. Apparatus according to any of claims 10-12, and comprising a hub (38) wherein the receive-circuitry, the CAM, and the transmit-circuitry are installed and which couples clients within the second network.

14. Apparatus according to any of claims 10-13, wherein the first protocol comprises an Ethernet protocol, and wherein the second protocol comprises a Fibre Channel protocol.

15. Apparatus according to any of claims 10-14, wherein the receive-circuitry is adapted to separate the source data-frame into the content data and a source header comprising the first-network-destination-address.

16. Apparatus according to any of claims 10-15, wherein the transmit-circuitry is adapted to incorporate the first-network-destination-address compatible with the first protocol in the second-network data-frame, and wherein the receive-circuitry is adapted to concatenate further content data received from the second network client with the first-network-destination-address so as to generate a first-network data-frame compatible with the first protocol for transmission over the first network to the source client.

17. Apparatus according to claim 16, wherein the transmit-circuitry is adapted to receive the second-network data-frame and to separate the second-network data-frame into the further content data and a first-network header comprising the first-network-destination-address.

18. Apparatus according to claim 16 or claim 17, wherein the transmit-circuitry comprises one or more memory devices (30) which are adapted to temporarily store the further content data and provide the further content data to the receive-circuitry.
